# EUROPEAN PATENT SPECIFICATION

(11) **EP 1 608 214 B1**
(45) Date of publication and mention of the grant of the patent: **24.03.2010**
(21) Application number: 04723262.4
(22) Date of filing: 25.03.2004
(51) Int. Cl.: A01C 5/06, A01C 7/00

(54) **IMPROVED SEED DRILL**
VERBESSERTE SÄMASCHINE
SEMOIR AMELIORE

(30) Priority: 29.03.2003 GB 0307343; 24.11.2003 GB 0327362
(43) Date of publication of application: 28.12.2005
(73) Proprietor: Claydon, Jeffrey Thomas, Newmarket Suffolk CB8 7YA (GB)
(72) Inventor: Claydon, Jeffrey Thomas, Newmarket Suffolk CB8 7YA (GB)
(74) Representative: Nash, Keith Wilfrid
(86) International application number: PCT/GB2004/001322
(87) International publication number: WO 2004/086849

(56) References cited:
- EP-A- 0 764 397
- WO-A-98/03053
- CA-A- 2 293 884
- US-A- 6 138 771

## Description

### Field of invention

This invention relates to a new method and apparatus for planting seed to produce agricultural crops.

### Background to the invention

It is known to cultivate land (which may have been previously ploughed) and then sow seed into the cultivated soil in a plurality of parallel spaced apart lines using conventional seed drilling apparatus that is pulled by, or attached to, a tractor.

WO98/03053 discloses a multi-tool combination type cultivator.

It is an object of the present invention to provide an improved method and apparatus for sowing seed directly into uncultivated land (e.g. into stubble). The method and apparatus may be used for to sowing in minimally cultivated seed-beds, which may contain substantial quantities of straw or other residue from a previous crop which can form a mulch, so as to create conservation tillage in which soil between the newly sown rows of the new crop is left relatively undisturbed, and without modification the apparatus may be used for conventional drilling.

### Summary of the invention

According to one aspect of the invention a method of sowing seed comprises the steps of:
(a) breaking up soil by pulling laterally spaced apart first tines therethrough with the tines set to penetrate a depth which bears a fixed relationship to the depth at which the seed is to be sown, to create a corresponding plurality of shallow trenches of broken up soil,
(b) at a distance behind the first tines, introducing seed to the rear of a second tine via seed delivery means associated therewith, the penetration depth of the second tine being equal to the depth at which the seed is to be sown,
(c) flattening the soil in the trenches by levelling means aligned with and following the second tines, **characterised in that**
(d) each second tine is in line with one of the first tines, so that the seed is planted only in the trenches formed by the first tines, whereby soil will only be disturbed in spaced apart linear regions determined by the lateral spacing of the tines, and the strips of soil therebetween will not be disturbed.

In a first preferred method the second tines penetrate to substantially the same depth as the first tines, and may include lateral wings to further break up and lift the soil to facilitate the deposition of seeds at the bottom of each trench.

In a second preferred method the second tines only penetrate to part of the depth of the trenches created by the first tines and laterally extending wings thereon lift and spread the soil broken up by the first tines near the top of each trench, and the seed is introduced below the lifted soil, so that the seed is covered by the soil as it drops back into the upper region of each trench.

In a third preferred method the second tines are set to penetrate to a greater depth than the first tines and may include lateral wings to further break up and lift the soil at the bottom of the trenches formed by the second tines to facilitate the deposition of seeds at the bottom of each trench formed by the second tines.

According to another aspect of the invention apparatus for performing the method of the invention comprises:
(a) a frame, adapted to be attached to the rear of a tractor,
(b) a first row of tines carried by the frame and spaced apart across the width of the frame,
(c) a second row of tines also carried by the frame and spaced to the rear of the first row in the direction of forward motion of the apparatus when in use,
(d) a hopper means containing seed,
(e) means for feeding seed therefrom to the rear and underside of each of the second tines,
(f) soil levelling means carried by the frame and located in alignment with the tines to the rear of the second row of tines (relative to the forward direction of movement of the tractor), so that as the apparatus moves in a forward direction, soil that has been disturbed by the tines is generally flattened by the passage of the levelling means thereover, **characterised in that**
(g) the second row tines are spaced apart across the width of the frame so that each of the tines in the second row is aligned with one of the tines in the first row whereby in use soil will only be disturbed in spaced apart linear regions determined by the lateral spacing of the tines, and the strips of soil therebetween will not be disturbed.

Preferably the penetration depth of at least some of the tines is adjustable relative to the frame. Typically the penetration depth of the first row of tines is adjustable and those in the following row are fixed relative to the frame, the actual depth to which the second row of tines penetrates being governed by the angle made by the frame to the horizontal as determined by its attachment to the towing tractor.

In one arrangement all the tines are set to penetrate to a similar depth, so that the seed is delivered near to or at the bottom of each trench of disturbed and broken-up soil. Where this is the case, it may not be necessary to compact the soil above the seed and the levelling means in that event may simply comprise levelling tines.

In another arrangement the tines are adjusted so that those in the second row penetrate to only part of the depth penetrated by those in the first row, so that the seed is delivered nearer to the top of each trench. In this event each levelling means preferably comprises a skid plate or a wheel, the height of which is adjustable, to create just sufficient pressure on the soil so as to compact the soil above and in the region of the seed, to create good soil to seed contact.

In a third arrangement the tines are adjusted so that those in the second row penetrate to a greater depth than those in the first row. This arrangement may be selected if ground conditions suggest that the final depth to which the seed is to be sown should be reached by breaking up the soil to a lesser depth by the first row of tines and dragging the deeper tines in the second row through the soil broken up to part of the final depth by the first row of tines, thereby reducing the loading on both rows of tines to less than what would be experienced by the tines in the first row if they had to *excavate* to the final depth.

Preferably the tines in the second row include lateral wings which lift the disturbed and broken up soil in the trench created by the first tines, as the second tines move therethrough, to allow seed to fall below the lifted soil which, as the second tines continue to move forward, falls back to cover the seed before the soil is flattened by the following levelling means.

Preferably the pressure exerted on the soil by the levelling means is adjustable and is selected so that the soil below the seed will not in general be compacted, so as not to impair the aeration and drainage properties created by breaking up the soil below where the seed is to lie.

The hopper means containing the seed may be a single large hopper carried centrally of the frame.

Seed delivery means may be provided which is adapted to covey seed from the hopper under gravity or using pneumatically powered delivery means to each of the seed delivery means associated with each of the second row of tines.

Alternatively a separate seed hopper with gravity or powered delivery means associated therewith, may be mounted above each of the tines in the second row of tines.

The frame may be adapted to be carried on a 3-point linkage at the rear of the tractor, so that the overall height of the frame, and angle of inclination thereof relative to the ground, can be adjusted in known manner.

The frame may include depth wheels ahead of the first row of tines.

Where the frame is to be trailed behind a tractor without using the 3-point linkage, a drawbar extends forwardly of the depth wheels for attachment to a towing hook on the tractor.

Where the frame is to be carried on the 3-point linkage, the front of the frame is attached to the lower links of the 3-point linkage, and the height and inclination of the frame is adjustable by altering the height of the frame relative to the depth wheels. This is achieved by altering the height of the lower links of the 3-point linkage so as to pivot the frame about the axis of rotation of the depth wheels. Typically the frame is also attached via an adjustable length strut to the upper point of attachment of the 3-point linkage.

Delivery of the seed near the top of the trench will normally be associated with the sowing of for example wheat, oats and barley, while delivery of the seed nearer the bottom of the trench will tend to be associated with the sowing of crops such as maize and beans, which are normally sown at a greater depth.

The spaced apart rows of tines and soil levelling means are preferably arranged in parallel spaced apart V formations.

Typically the tines in the first row each comprises a knife or slotter tine which can be adjusted independently for depth of work. Such tines break the soil to the desired depth, create drainage, remove compaction and aerate the soil, which is essential for healthy crop growth. Because of their narrow design each of these first tines cuts through even heavy loam and clay and forms a primary passage or trench for the following second tine which also carries the seed delivery means for that trench.

Each second tine may also be independently adjustable for depth of work and may be fitted with a sweep/A hoe with a seed spreader outlet to sow seed across the width of the trench to whatever level the second tine penetrates.

Typically this width is of the order 150mm, so that the seed can be thought of as being sown in spaced apart strips normally 150mm wide.

Typically the lateral spacing of the tines is of the order of 320mm so that the result will be 150/160mm wide seeded strips separated by 150/160mm wide unseeded strips.

Where the method and apparatus of the invention is used on cropped land where stubble or other crop residue remains in the soil, the latter will remain in the unseeded strips and be added to by the trenching action of the tines. These unseeded strips will constitute conservation bands between the cultivated and seeded strips, in that each front tine creates a path for each following second tine and seed delivery means through the crop residue, and the second tines tend to displace crop residue such as straw and stubble as well as soil into the conservation strips. As previously described the seed is injected below the second tine, and soil and crop residue flows back over the seed, to cover it to an appropriate depth, as the second tines advance.

Where seed is to be sown near the top of the trench the second tines may be spring tines the lower ends of which include lateral wings to form an A hoe to lift the soil as described. Typically the springs are S-shaped.

Where wheels follow the tines to flatten and compact the soil, one wheel preferably follows each second tine, and where the second tines are spring tines, each wheel may be attached by a rigid arm to the centre of the S-spring, the upper part of the spring serving to exert downward force through the arm on the wheel and thereby through the wheel to the soil. As each wheel is independent an even pressure is exerted on each seeded row, unlike barrel rolls fitted on some drills.

Compaction of the soil after sowing gives good seed to soil contact, enhancing germination and reducing slug damage.

Where the seed is to be sown at or near the bottom of each shallow trench, the second tines may be adjusted to penetrate to substantially the same depth as the first, and will normally comprise slotter tines similar to the first tines, and in this event the subsequent soil flattening may be achieved using wheels or more preferably by using levelling tines, one set of levelling tines for each second tine.

In a method in which the first tines penetrate deeper than the second tines, the first tines are typically set to penetrate to a depth in the range 20-170mm deeper than the depth to which the seed is to be delivered.

The invention provides a seed drill and method which is different from anything currently available as it can direct drill or be used as a conventional drill over a wide set of soil conditions.

The drill is unique in the way it is set out, how it places the seed and in that it can deal with crop residues in an advantageous manner.

It also only cultivates the soil where the seed is to be planted, thereby creating a conservation tillage, by not disturbing the soil between the rows of crop. This has the advantage that weed seed in the soil between the sown rows will tend not to germinate because the soil between the rows has not been disturbed.

When used as a direct drill in straw and stubble it has the advantage of moving the crop residue such as straw and stubble onto the soil between the crop rows. This acts as a mulch, and further enhances weed control with the added advantage that the crop residue retains soil moisture.

This is a considerable advantage on lighter soils that can burn off in dry seasons. However the invention is equally applicable to heavier soils since the local break up and resulting aeration and drainage created by the first tines, below the seed depth, assists in the germination and subsequent growth of the seeds.

Where seeds such as beans are to be sown it is normally advantageous not to disturb the soil below the depth at which they are to be sown so that in that event the first tines should not penetrate lower than the second, and advantageously may be set to penetrate to a slightly reduced depth compared to the tines in the second row, to achieve this.

To obtain the best mulching effect when using the invention, it is advantageous to chop previous crop residue such as straw, finely and to spread the residue (such as chaff and straw) evenly over the ground as or after the previous crop is harvested.

Leaving the stubble and not ploughing does allow seed from a previous crop and weed seeds to germinate, but these can be sprayed off with a contact herbicide.

Road wheels may be attached to the frame and adapted to be raised or lowered as required, for trailing the machine behind a tractor when the road wheels are in their lowered position.

The road wheels may be removable from the frame to reduce the weight of the machine when in use, and quick release attachment means may be provided to allow the road wheels to be mounted and demounted as required.

Raising and lowering may be achieved by pivoting support arms relative to the frame, the wheels being carried on stub axles at the ends of the arms remote from the ends which are pivotally attached to the frame.

The height adjustment of the road wheels may be achieved manually by rotating a screw jack or more preferably by a powered drive such as one or more hydraulic or pneumatic rams.

In order to reduce the overall width of the machine for transport on roads or manoeuvring in restricted spaces, the frame may be constructed from two or more sub-frames which are adapted to be locked in two or more configurations, one of which corresponds to the normal layout for drilling and in another of which the separate parts are folded or swung inwardly, possibly one above the other, to reduce the overall width of the machine.

The invention will now be described by way of example with reference to the accompanying drawings and illustrations in which:
Fig 1 is a rear perspective view of a machine embodying the invention,
Fig 2 is a side view of another machine also embodying the invention, but arranged to sow seed to greater depth and having levelling tines at the rear instead of wheels,
Fig 3 is a diagrammatic side view of a machine of the type shown in Fig 1, when mounted on the tractor 3-point linkage,
Fig 4 is a diagrammatic side view of a machine similar to that of Fig 3, but in which the frame is attached to the lower links only of the 3-point linkage, and which shows a transport (road) wheel which can be pivoted into and out of use,
Fig 5 is a diagrammatic side view of the elements making up the machine of Figs 1 and 3,
Fig 6 is a diagrammatic top plan view of the same machine,
Fig 7 is a diagrammatic view looking backwards along the two aligned tines and levelling wheels associated with two of the seeding trenches created by the machine,
Fig 8 is a diagrammatic cross-section through the ground showing the position occupied by the tines as the trenches are formed at sowing, the position of the seed and resulting plants, and the conservation strips of unbroken soil,
Fig 9 is an enlarged cross-section through a trench during seeding using the machine of Figs 1 and 3,
Fig 10 is a diagrammatic side view showing a drill embodying the invention attached to the 3-point linkage of a tractor for raising and lowering in use,
Fig 11 is a similar view showing the same drill attached to the tractor via a drawbar, and
Fig 12 is a plan view from above of one line of tines and compacting wheel showing how the seed is spread.

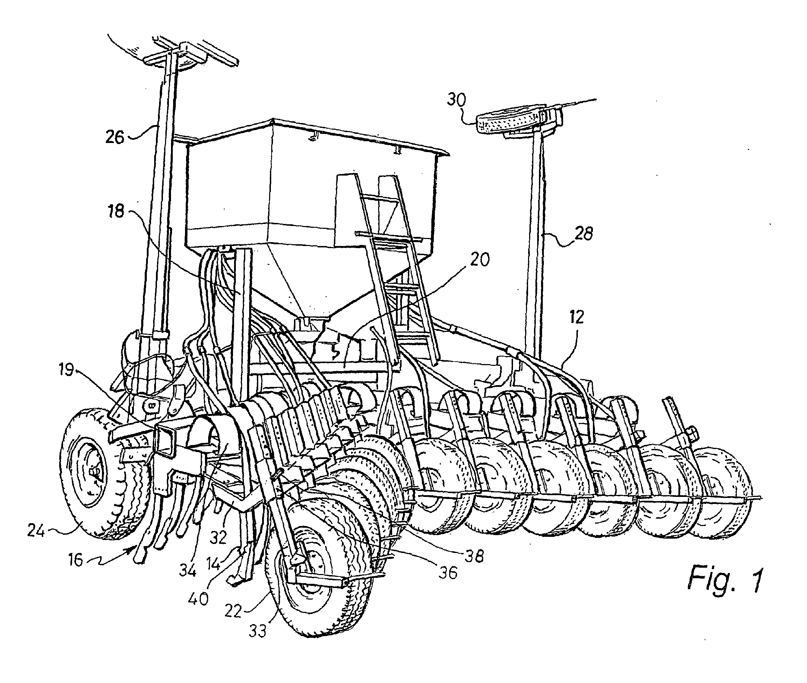

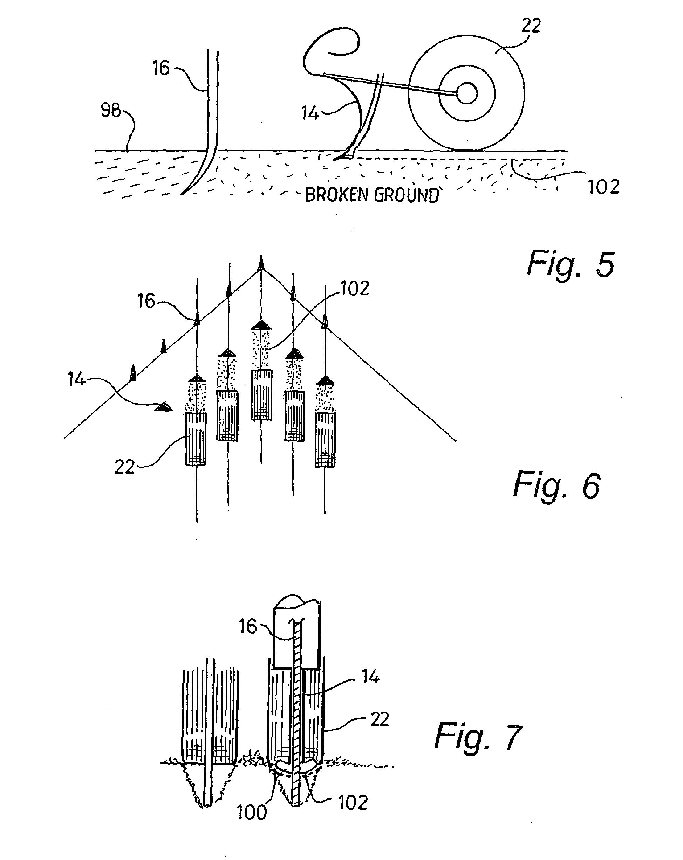

In Fig 1 a seed drill is shown embodying the invention and comprising a seed hopper 10 from which seed is delivered by a proprietary pneumatic seed delivery system (or by gravity) via delivery tubes such as 12 to each of a plurality of seeding tines (to be described later) one of which is denoted by reference numeral 14. The seeding tines are arranged in a V-shaped array (when viewed from above), as can be seen in Figs 1 and 6.

A similar V-shaped array of slotter tines is arranged in front of the seeding tines. One of these slotter tines is shown at 16.

There is a similar number of tines in each of the two arrays and the tines are aligned in the direction in which the machine will move when in use.

The hopper 10 and arrays of tines 14, 16 are carried by a complex frame formed by a plurality of rigid struts - typically of hollow box sections, welded or otherwise joined together. One of these struts is designated 18, another 19 and another 20.

To the rear of the V-shaped array of seeding tines 14 is arranged a similar V-shaped array of levelling wheels, one of which is denoted by 22. There is one wheel for each seeding tine and like the tines, the wheels are aligned with the tines in the preceding V-shaped arrays of tines, in the direction in which the machine will travel in use.

Ahead of the slotter tines 16 and on opposite sides of the frame are mounted depth controlling wheels, one of which can be seen at 24 in Fig 1. Each wheel is carried on a stub axle at the end of a pivoting arm and the inclination of the latter is adjustable to alter the height of the frame relative to the wheel and therefore the ground. This in turn alters the depth to which the tines will penetrate.
At the front of the machine there is a drawbar or other mechanism (not visible in Fig 1) by which the machine can be attached to a tractor, to enable it to be drawn across a field in use.

Although not shown in Fig 1 transport wheels can be secured by means of trailing arms, to the frame, which when in place can be lowered into contact with the ground so as to lift the tines, levelling wheels and depth control wheels clear of the ground.
Guiding wheels are carried on arms 26, 28 which can be elevated (as shown) relative to the frame for storage and transportation and when not required, but which can be selectively swung out and down in known manner to assist the tractor driver, when drilling, to position the tractor and machine correctly relative to the previously drilled region of the field.

One of the guide wheels is denoted by 30 in Fig 1. Skids may be used in place of wheels.

In the drill of Fig 1 both rows of tines are set to penetrate relatively deeply into the soil, but the seeding tines 14 are set to penetrate to a slightly smaller depth than the slotter tines 16, so that disturbed soil exists both below and above the level at which the seed is delivered by the seeding tines 14.

This arrangement would be typical for drilling wheat or barley seed.

The wheels 22 are required to firm the soil over the seed to ensure good soil/seed contact to promote germination. To this end each of the wheels is carried at the trailing end of a two-part rigid arm assembly such as 32, 33 the forward end 32 being attached to a curved spring, one of which is denoted by 34 in Fig 1. The upper end of each spring is attached to one of the struts making up the frame and the lower end carries not only the trailing arm 32 but also serves as the attachment point for the upper end of the seeding tine 14 aligned with that wheel.

The second strut 33 of the two-part wheel support assembly is slidable in a box section sleeve 36 at the trailing end of 32 and holes in the walls of the box section strut 33 allow the height of the wheel to be adjusted relative to the strut 32 by aligning a pair of holes in the strut 33 with a pair of holes in the sleeve 36 and inserting a pin such as 38 therethrough.

The slotter tines 16 can also be adjusted relative to the frame (in particular strut 19) both as regards depth to which they will penetrate the soil and fore and aft along the frame and/or the angle at which they extend downwardly below the frame, using a similar method of aligned holes in the frame part to which the tines are attached and holes in the upper ends of the tines, and one or more pins which can be pushed through aligned holes as required, to maintain the desired position of the slotter tines 16 relative to the frame.

Although not shown, the seeding tines may also be adjustable in height and angle relative to the lower ends of the springs 34 to which they are attached.

A flexible seed delivery tube such as 12 is attached to the upper end of a rigid delivery tube such as 40 which is attached to and extends to the rear of each seeding tine 14, to deliver seed below and to the rear of the foot of the seeding tine.

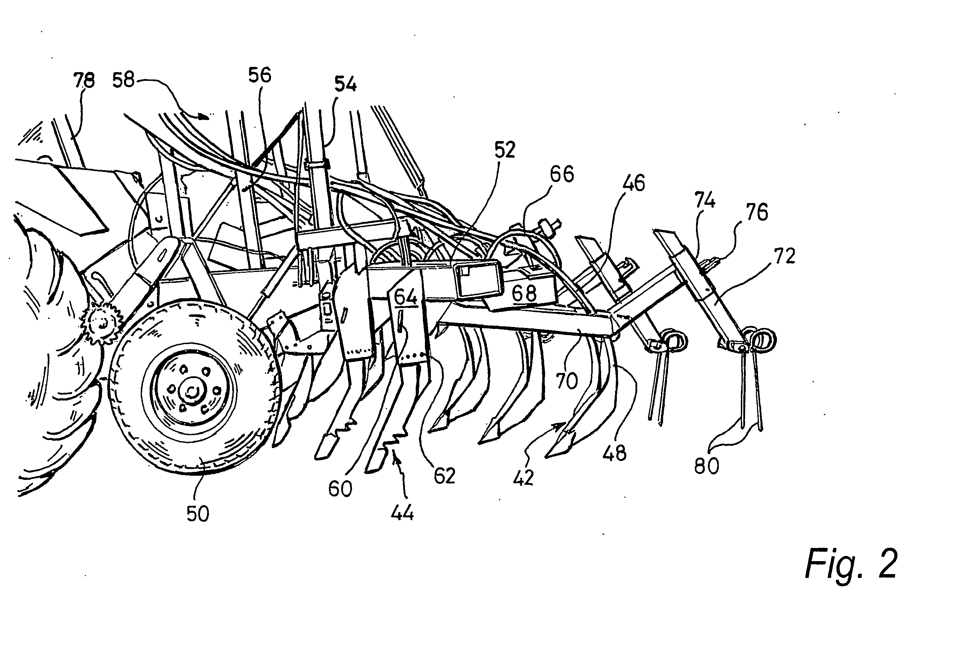

Fig 2 is a side view of an alternative drill also embodying the invention, in which the seeding tines are denoted by 42, the forward slotter tines by 44, the flexible seed delivery tube by 46 and the rigid seed delivery tube by 48. A depth control wheel is shown at 50, rigid frame members are denoted by 52, 54, 56 and a seed hopper by 58.

Slotter tines are attached by pins 60, 62 to plates 64 welded to the frame strut 52 and each seeding tine 42 is carried at the trailing end of a C shaped spring 66 the upper end of which is bolted to a rearward rigid extension 68 also welded to the frame strut 52.

Also attached to the lower end of the spring 66 is a two-part trailing arm support 70, 72, the part 70 being cranked and including at its rear end a box sleeve 74 in which the box section strut making up part 72 slides. The position of 72 in 74 is maintained by a pin 76.

The lower end of each seeding tine 14 in Fig 1 (or 42 in Fig 2) may be formed with wings to form an A-hoe.

The frame of the drill shown in Fig 2 is adapted at its forward end to be mounted on a 3-point linkage of a tractor part of which can be seen in Fig 2 and is denoted by 78.

In place of the levelling wheel 22 of Fig 1 the drill of Fig 2 includes a bifurcated sprung levelling tine 80 at the lower end of each of the struts 72.

The slotter tines 44 and seeding tines 42 of the drill of Fig 2 are set to penetrate the soil to substantially the same depth, which may be 100-150mm when seeding beans for example. Whereas it is desirable to firm the soil with wheels when sowing wheat or barley seed for example, it is not so necessary when sowing seed to the greater depth associated for example with beans. In that event the surface tilling action of the tines 80 is sufficient to redistribute and level the disturbed soil over each strip of ground which has been seeded, thereby ensuring good aeration and drainage above the seeds.

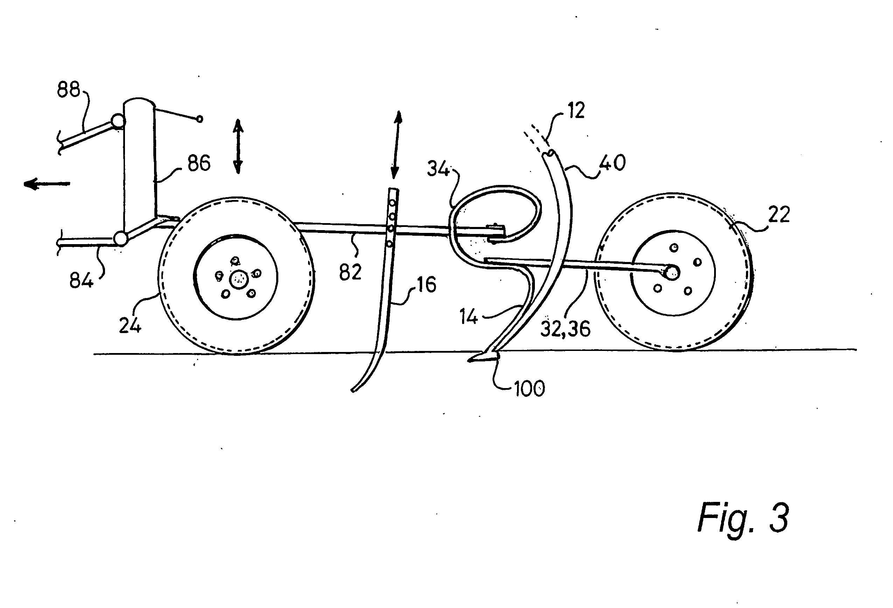

Fig 3 illustrates diagrammatically the key features of the Fig 1 drill and the same reference numerals have been used to denote similar items. Visible in Fig 3 is a fore to aft frame member 82 which is not visible in Fig 1.

In Fig 3 the front of frame 82 is attached to the lower links 84 of a tractor 3-point linkage. The front end of 82 includes a rigid upright frame 86 to which the adjustable top link 88 is attached so that by adjusting the length of 88, so the angle at which the frame 82 will extend from the rear of the tractor can be adjusted.

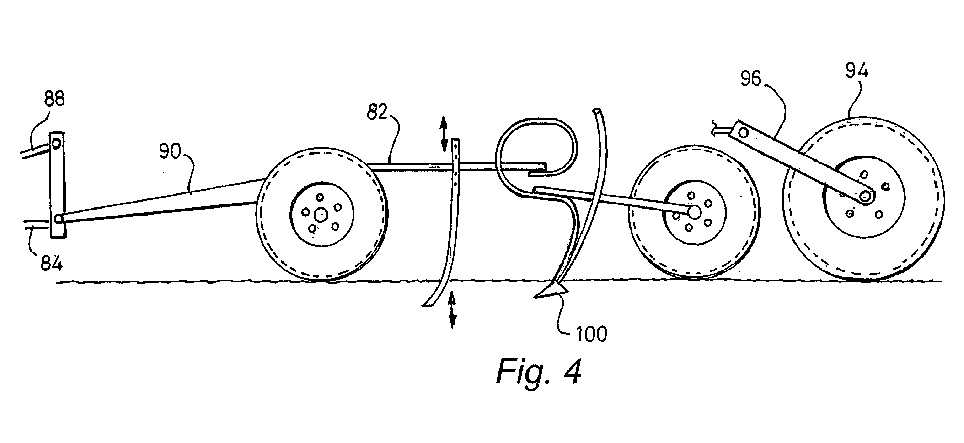

Fig 4 illustrates an alternative manner of attaching the front end of 82 via a drawbar 90 to the lower links 84 of the tractor 3-point linkage. Here a rigid strut 92 extends between the upper and lower links and the front of the drawbar.

Also shown in Fig 4 is a transport wheel 94 carried by a trailing arm 96 which is adapted to be secured at its forward end to and appropriate extension of the frame 82 (not shown), when required.

Fig 5 shows the relationship between slotter tines 16, seeding tines 14, levelling wheels 22 and the ground 98 when sowing wheat or barley for example, near the surface. Fig 6 shows the V-shaped array of tines and wheels.

Fig 7 shows how the lateral spacing of the tines and wheels defines the gap between seeded strips. Visible in Figs 3, 4 and 7 are the A-hoe wings 100 below and to the rear of which the seed is delivered in use as denoted by 102 in Figs 5-7.

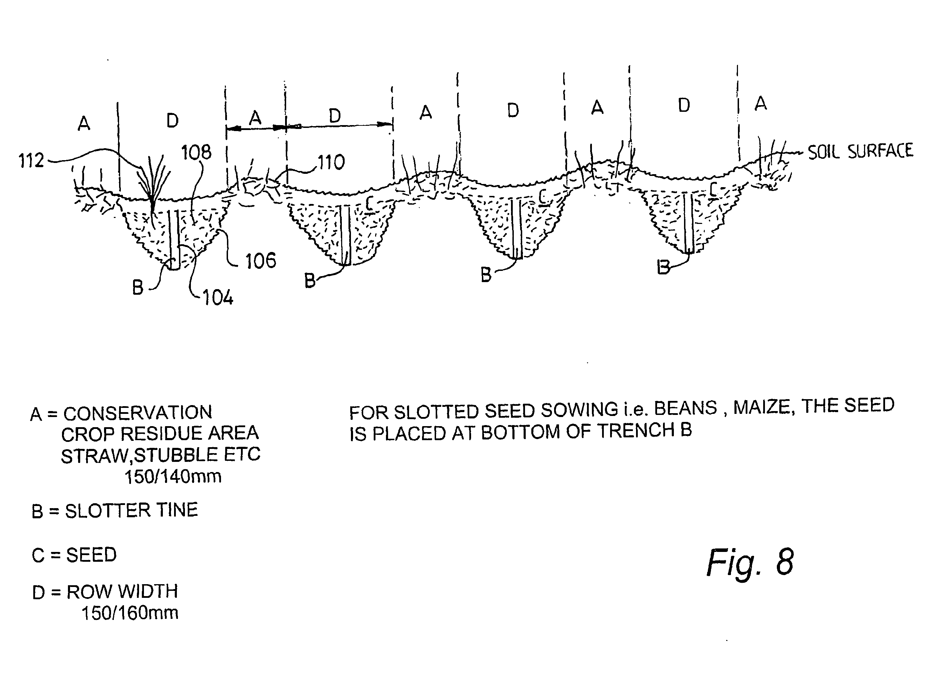

Fig 8 shows the result obtained when using this improved drill. The slotter tines are indicated at 104, and typically are 20mm wide. Their effect is to create a generally triangular section trench (or slot) such as 106 in which the soil is broken up. The seed is delivered to whatever depth is desired in the trench - shown at 108 in Fig 8.

The action of the tines 104 is to displace soil and previous crop residue (if present) into the strips of ground left untouched by the tines 104, and this is denoted by 110.

After germination seed such as 108 will result in plant growth such as at 112.

As shown the width at the top of each trench 106 is approximately 150mm and by spacing the tines laterally by 300-320mm, an uncultivated strip approximately 150-160mm wide will remain between each seeded strip corresponding to the trench 106.

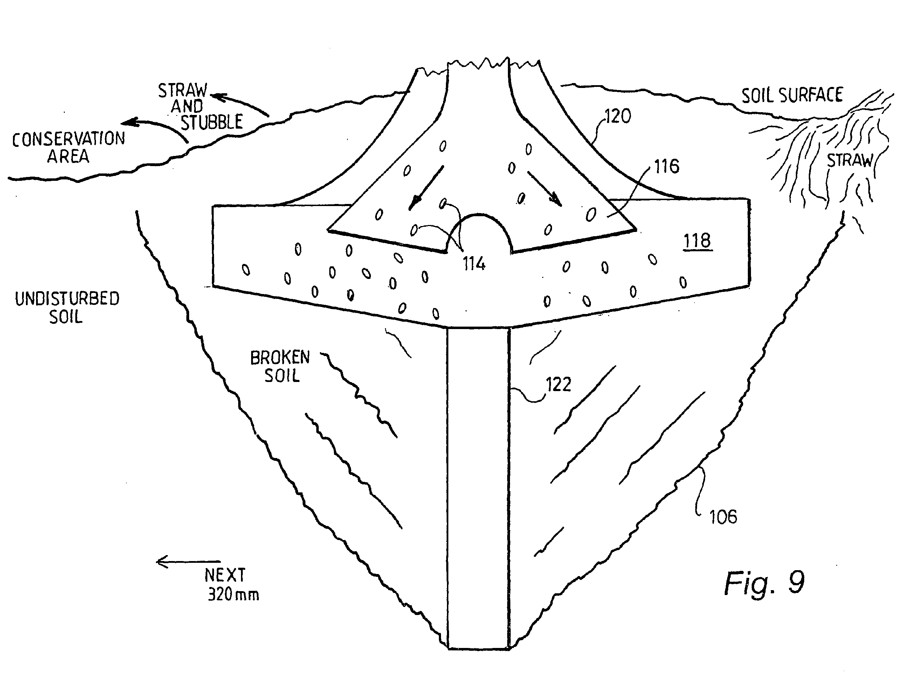

Fig 9 shows the effect of the drilling in one of the trenches of Fig 8. Here the seed 114 is shown being delivered from a pneumatically powered seed delivery system via an injector 116 immediately to the rear of an A-hoe 118 at the lower end of a seeding tine 120. The slotter tine aligned with and preceding the A-hoe and seeding tine 118, 120 is shown at 122.

As shown in Figs 8 and 9 the seed is being sown near the top of the trench 106 but if beans or the like were being sown, the seeding tine 120 and injector 116 would be set to penetrate nearer to the bottom of the trench and the A-hoe would likely be replaced by smaller wings.

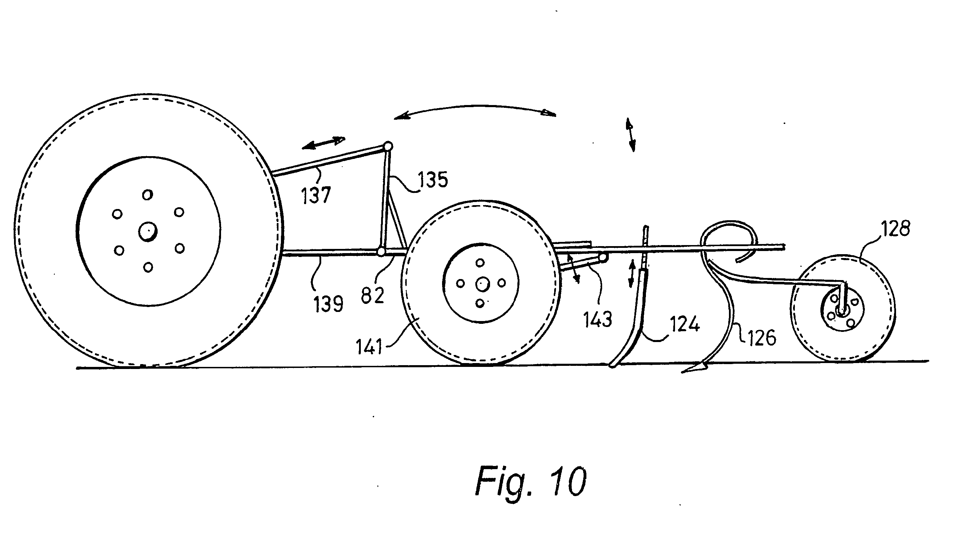

In Fig 10 frame 82 includes a rigid upright frame member 135 (typically a triangulation) at its front end enabling the frame to be attached to the upper and lower links of a tractor 3-point linkage 137, 139 respectively. Adjusting the length of link 137 will alter the angle made by the upright section 135 to the horizontal - and therefore the angle of frame 82 to the horizontal. Altering the inclination of lower links 139 will raise or lower frame 82 which in known manner will remain at substantially the same angle to the horizontal. Thus, in this way, the frame can be raised for transportation or turning in the field and lowered until the depth control wheels 141 engage the ground. Each wheel 141 is carried by a pivoting arm 143 which is adjustable in inclination relative to the frame 82 so as to thereby alter the depth to which the tines 124 and 126 will penetrate, and up to a point the pressure which will be exerted by the compacting wheels 128.

The arms 143 may be manually adjustable or hydraulically or pneumatically adjustable.

In general it is only necessary to alter the position relative to the frame 82 of one of the sets of tines. Typically the front tines 124 are adjustable relative to the frame 82 by holes in the shank of the tine and a pair of holes in the frame 82 and a pin which can be inserted therethrough when the desired position is reached.

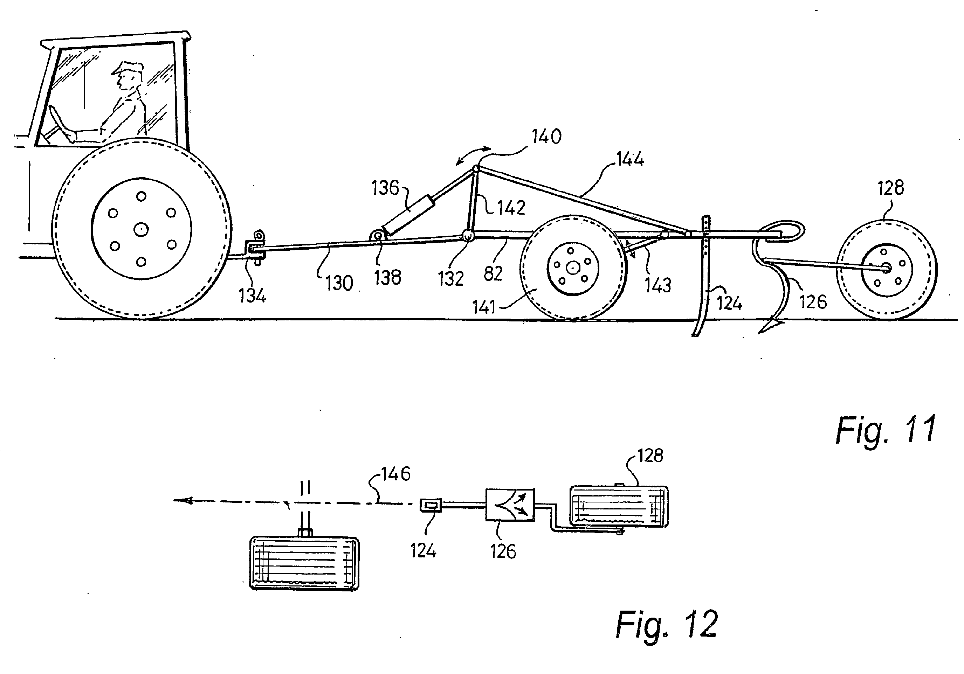

In Fig 11 the frame includes a towbar 130 pivotally jointed at 132 to the front end of the frame 82 and attached at its front end to the tractor drawbar 134. An adjustable strut 136 (hydraulic ram, pneumatic ram or bottle screw) is pivotally fitted to a mounting 138 midway along the towbar 130 at one end, and at its other end to the upper end 140 of a triangulation framework 142, 144. Adjustment of 136 causes the frame 82 to pivot about the axis of the axles of depth control wheels 141 which are mounted to the frame by arms 143 as described in relation to Fig 10.

The function, adjustability and mounting of the tines 124, 126 and wheels 128 is also as described in relation to Fig 10.

In sue the wheels 141, length of strut 136 and position of tines 124 relative to the frame 82 are selected so that when the frame 82 is generally parallel to the ground the tines 124, 126 will each penetrate to the desired depth and an appropriate pressure will be exerted through wheels 128 to compact the soil behind the seeding tines 126.

Fig 12 shows how each front (slotter) tine 124 prepares only the ground which is to be seeded and does not need to disturb soil on either side of the seeding line 146.

The following tine 126 and seed delivery device is arranged to spread the seed on either side of the slot created by tine 124 by means of a suitable spreading device to the rear of tine 126, or (if tine 126 is adjusted to penetrate to substantially the same depth as tine 124) at spaced apart points along the line of the slot 145 at or near the bottom of the slot.

Where seed is spread using an A-hoe coulter on the tine on either side of the slot (i.e. shallow drilling) the width of the spread may be 75mm on either side of the slot (giving row width of approximately 150-160mm) and if the tines are spaced apart by 300-320mm, approximately 150mm of undisturbed soil between the rows.

Where seed is sown individually at the bottom of the slot, the row width will be approximately 20mm (i.e. equal to the slot width) but now the spacing between rows will be some 300mm.

The invention thus provided a direct drill which creates minimal disturbance to soil between the rows of crop being seeded, but which can also be used to drill conventionally prepared seedbeds if required.

## Claims

1. A method of sowing seed (102, 108, 114) comprising the steps of:
(a) breaking up soil by pulling laterally spaced apart first tines (16, 44, 104, 124) therethrough with the tines set to penetrate a depth which bears a fixed relationship to the depth at which the seed is to be sown, to create a corresponding plurality of shallow trenches of broken up soil with strips of undisturbed soil therebetween,
(b) at a distance behind the first tines (16, 44, 104, 124), introducing seed immediately to the rear of a second tine (14, 42, 120, 126) via seed delivery means (12, 46, 48, 116) associated with the second tine, the penetration depth of the second tine being equal to the depth at which the seed is to be sown,
(c) flattening the soil in the trenches by levelling means (22, 128) aligned with and following the second tines, **characterised in that**,
(d) each second tine is in line with one of the first tines, so that the seed is planted only in the trenches formed by the first tines, whereby soil will only be disturbed in spaced apart linear regions determined by the lateral spacing of the tines, and the strips of soil therebetween will not be disturbed.

2. A method as claimed in claim 1 wherein second tines (14, 42, 120, 126) penetrate to substantially the same depth as the first tines (16, 44, 104, 124).

3. A method as claimed in claim 2 wherein the second tines (14, 42, 120, 126) include lateral wings (100) to break up and lift the soil to facilitate the deposition of seeds at the bottom of each trench.

4. A method as claimed in claim 1 wherein the second tines (14, 42, 120, 126) penetrate to part of the depth of the trenches created by the first tines (16, 44, 104, 124).

5. A method as claimed in claim 4 wherein laterally extending wings (100) on the second tines (14, 42, 120, 126) lift and spread the soil broken up by the first tines (16, 44, 104, 124) near the top of each trench, and the seed (102, 108, 114) is introduced below the lifted soil, so that the seed is covered by the soil as it drops back into the upper region of each trench.

6. A method as claimed in claim 1 wherein the second tines (14, 42, 120, 126) penetrate to a greater depth than the first tines (16, 44, 104, 124).

7. A method as claimed in claim 6 wherein the second tines (14, 42, 120, 126) include lateral wings (100) to break up and lift the soil at the bottom of the trenches formed by the second tines to facilitate the deposition of seeds (102, 108, 114) at the bottom of each trench formed by the second tines.

8. Apparatus for cultivating soil and sowing seed comprising:
(a) a frame, adapted in use to be towed by, or attached to the rear of, a tractor,
(b) a first row of tines (16, 44, 104, 124) carried by the frame and spaced apart across the width of the frame,
(c) a second row of tines (14, 42, 120, 126) also carried by the frame and spaced to the rear of the first row in the direction of forward motion of the apparatus when in use,
(d) a hopper means (10) containing seed (102, 108, 114),
(e) means (12, 46, 48, 116) for feeding seed therefrom down the rear and to the underside of each of the second tines,
(f) soil levelling means (22, 128) carried by the frame and located in alignment with the tines to the rear of the second row of tines relative to the said forward direction of motion when in use, so that in use as the apparatus moves in a forward direction, soil that has been disturbed by the tines is generally flattened by the passage of the levelling means thereover, **characterised in that**
(g) the second row tines are spaced apart across the width of the frame so that each of the tines in the second row is aligned with one of the tines in the first row whereby in use soil will only be disturbed in spaced apart linear regions determined by the lateral spacing of the tines, and the strips of soil therebetween will not be disturbed.

9. Apparatus as claimed in claim 8 wherein the penetration depth of at least some of the tines is adjustable relative to the frame.

10. Apparatus as claimed in claim 8 or 9 wherein the height of the levelling means (22, 128) is adjustable, and in use the height is adjusted to create just sufficient pressure on the soil so as in use to compact the soil above and in the region of the seed, to create good soil to seed contact.

11. Apparatus as claimed in claims 9 or 10 wherein the tines in the second row (14, 42, 120, 126) include lateral wings (100) which in use lift the disturbed and broken up soil in the trench created by the first tines, as the second tines move therethrough, to allow seed to fall below the lifted soil which, as the second tines continue to move forward, will fall back to cover the seed before the soil is flattened by the following levelling means.

12. Apparatus as claimed in any of claims 8 to 11 wherein a separate seed hopper (10) is mounted above each of the tines (14, 42, 120, 126) in the second row of tines.

13. Apparatus as claimed in any of claims 8 to 12 wherein the frame is adapted to be attached to a 3-point linkage at the rear of the tractor, so that in use the overall height of the frame and its angle of inclination relative to the ground, can be adjusted.

14. Apparatus as claimed in any of claims 8 to 13 further comprising road wheels (22, 128) and a drawbar which extends forwardly of the frame for attachment to a towing hook on the tractor, to allow the frame to be trailed behind a tractor.

15. Apparatus as claimed in any of claims 8 to 14 wherein at least some of the tines are independently adjustable for depth of work.

16. Apparatus as claimed in any of claims 8 to 15 wherein the second tines (14, 42, 120, 126) are S-shaped spring tines and wheels (22, 128) are provided which in use follow the tines to flatten and compact the soil, and one wheel is provided for each second tine, and each wheel is attached by a rigid arm to the centre of the S-spring of its associated second tine, the upper part of the spring serving in use to exert a downward force on the wheel through the arm and thereby through the wheel to the soil.

17. Apparatus as claimed in any of claims 8 to 16 wherein the frame is constructed from at least two sub-frames which are adapted to be locked in use in at least two configurations, in one of which the sub-frames adopt a layout for drilling and in another of which at least one of the sub-frames is folded or swung inwardly, to reduce the overall width of the machine for transport on roads or manoeuvring in restricted spaces.

## Patentansprüche

1. Verfahren zum Säen von Saatgut (102, 108, 114) mit den folgenden Schritten:
(a) Auflockern der Erde, indem seitlich beabstandete erste Zinken (16, 44, 104, 124) hindurchgezogen werden, wobei die Zinken so eingestellt sind, dass ihre Eindringtiefe in einem festen Verhältnis zu der Tiefe steht, in der das Saatgut zu säen ist, um eine entsprechende Vielzahl von flachen Gräben aufgelockerter Erde zu erzeugen, zwischen denen Streifen nicht aufgelockerter Erde liegen,
(b) Einführen von Saatgut in einem Abstand hinter den ersten Zinken (16, 44, 104, 124) unmittelbar hinter einer zweiten Zinke (14, 42, 120, 126) über ein der zweiten Zinke zugeordnetes Saatgutausbringmittel (12, 46, 48, 116), wobei die Eindringtiefe der zweiten Zinke der Tiefe entspricht, in der das Saatgut zu säen ist, und
(c) Glätten der Erde in den Gräben durch Planiermittel (22, 128), die auf die zweiten Zinken ausgerichtet sind und auf diese folgen, **dadurch gekennzeichnet, dass**
(d) jede zweite Zinke mit einer der ersten Zinken auf einer Linie liegt, so dass das Saatgut nur in den von den ersten Zinken gebildeten Gräben ausgebracht wird, wodurch Erde nur in beabstandeten linearen Bereichen, die durch den seitlichen Abstand der Zinken bestimmt werden, gelockert wird, während die Streifen Erde dazwischen nicht gelockert werden.

2. Verfahren nach Anspruch 1, wobei die zweiten Zinken (14, 42, 120, 126) im Wesentlichen dieselbe Eindringtiefe wie die ersten Zinken (16, 44, 104, 124) haben.

3. Verfahren nach Anspruch 2, wobei die zweiten Zinken (14, 42, 120, 126) seitliche Flügel (100) zum Auflockern und Anheben der Erde aufweisen, um das Ablegen von Saatgut auf dem Boden jedes Grabens zu erleichtern.

4. Verfahren nach Anspruch 1, wobei die Eindringtiefe der zweiten Zinken (14, 42, 120, 126) teilweise der Tiefe der von den ersten Zinken (16, 44, 104, 124) gebildeten Gräben entspricht.

5. Verfahren nach Anspruch 4, wobei sich seitlich erstreckende Flügel (100) an den zweiten Zinken (14, 42, 120, 126) die von den ersten Zinken (16, 44, 104, 124) aufgelockerte Erde in der Nähe der Oberseite jedes Grabens anheben und verteilen und das Saatgut (102, 108, 114) unter die angehobene Erde eingeführt wird, so dass das Saatgut von der Erde abgedeckt wird, wenn sie in den oberen Bereich jedes Grabens zurückfällt.

6. Verfahren nach Anspruch 1, wobei die Eindringtiefe der zweiten Zinken (14, 42, 120, 126) größer als die der ersten Zinken (16, 44, 104, 124) ist.

7. Verfahren nach Anspruch 6, wobei die zweiten Zinken (14, 42, 120, 126) seitliche Flügel (100) zum Auflockern und Anheben der Erde am Boden der durch die zweiten Zinken gebildeten Gräben aufweisen, um das Ablegen von Saatgut (102, 108, 114) auf dem Boden jedes durch die zweiten Zinken gebildeten Grabens zu erleichtern.

8. Vorrichtung zur Bodenbearbeitung und zum Säen von Saatgut mit
(a) einem Rahmen, der geeignet ist, im Gebrauch von einem Traktor gezogen oder hinten an einem Traktor angebracht zu werden,
(b) einer ersten Reihe Zinken (16, 44, 104, 124), die vom Rahmen getragen werden und über die Breite des Rahmens beabstandet sind,
(c) eine zweite Reihe Zinken (14, 42, 120, 126), die ebenfalls vom Rahmen getragen werden und hinter der ersten Reihe in der Vorwärtsbewegungsrichtung der Vorrichtung, wenn diese im Gebrauch ist, beabstandet sind,
(d) einem Trichtermittel (10), das Saatgut (102, 108, 114) enthält,
(e) Mitteln (12, 46, 48, 116) zum Zuführen von Saatgut an der Rückseite davon hinunter und zur Unterseite jeder der zweiten Zinken,
(f) Erdplaniermitteln (22, 128), die vom Rahmen getragen werden und mit den Zinken hinter der zweiten Reihe Zinken bezüglich der Vorwärtsbewegungsrichtung im Gebrauch ausgerichtet angeordnet sind, so dass die von den Zinken aufgelockerte Erde im Gebrauch, wenn sich die Vorrichtung in einer Vorwärtsrichtung bewegt, allgemein geglättet wird, indem die Planiermittel darübergehen, **dadurch gekennzeichnet, dass**
(g) die zweite Reihe Zinken über die Breite des Rahmens beabstandet sind, so dass jede der Zinken in der zweiten Reihe auf eine der Zinken in der ersten Reihe ausgerichtet ist, wodurch im Gebrauch Erde nur in beabstandeten linearen Bereichen, die durch den seitlichen Abstand der Zinken bestimmt werden, gelockert wird, während die Streifen Erde dazwischen nicht gelockert werden.

9. Vorrichtung nach Anspruch 8, wobei die Eindringtiefe mindestens einiger der Zinken bezüglich des Rahmens verstellbar ist.

10. Vorrichtung nach Anspruch 8 oder 9, wobei die Höhe der Planiermittel (22, 128) verstellbar ist und die Höhe im Gebrauch verstellt wird, um gerade ausreichend Druck auf die Erde auszuüben, so dass die Erde im Gebrauch über dem Saatgut und in seinem Bereich verdichtet wird, um für einen guten Kontakt zwischen Erde und Saatgut zu sorgen.

11. Vorrichtung nach Anspruch 9 oder 10, wobei die Zinken in der zweiten Reihe (14, 42, 120, 126) seitliche Flügel (100) aufweisen, die im Gebrauch die aufgelockerte Erde in dem von den ersten Zinken gebildeten Graben anheben, während sich die zweiten Zinken hindurchbewegen, damit Saatgut unter die angehobene Erde fallen kann, die zurückfällt und das Saatgut abdeckt, während sich die zweiten Zinken weiter vorwärtsbewegen, bevor die Erde von den folgenden Planiermitteln geglättet wird.

12. Vorrichtung nach einem der Ansprüche 8 bis 11, wobei ein getrennter Saatguttrichter (10) über jeder der Zinken (14, 42, 120, 126) in der zweiten Reihe Zinken montiert ist.

13. Vorrichtung nach einem der Ansprüche 8 bis 12, wobei der Rahmen geeignet ist, an einer Dreipunktanhängung hinten am Traktor angebracht zu werden, so dass die Gesamthöhe des Rahmens und sein Neigungswinkel zum Boden im Gebrauch verstellt werden kann.

14. Vorrichtung nach einem der Ansprüche 8 bis 13, ferner mit Straßenrädern (22, 128) und einer sich vom Rahmen nach vorne erstreckenden Deichsel zum Anbringen eines Schlepphakens am Traktor, damit der Rahmen hinter einem Traktor hergezogen werden kann.

15. Vorrichtung nach einem der Ansprüche 8 bis 14, wobei mindestens einige der Zinken unabhängig für Arbeitstiefe verstellbar sind.

16. Vorrichtung nach einem der Ansprüche 8 bis 15, wobei es sich bei den zweiten Zinken (14, 42, 120, 126) um S-förmige Federzinken handelt und Räder (22, 128) vorgesehen sind, die im Gebrauch den Zinken folgen, um die Erde zu glätten und zu verdichten, wobei ein Rad für jede zweite Zinke vorgesehen ist und jedes Rad über einen starren Arm an der Mitte der S-Feder seiner zugeordneten zweiten Zinke angebracht ist, wobei der obere Teil der Feder im Gebrauch dazu dient, durch den Arm und **dadurch** durch das Rad auf die Erde eine nach unten gehenden Kraft auf das Rad auszuüben.

17. Vorrichtung nach einem der Ansprüche 8 bis 16, wobei der Rahmen aus mindestens zwei Unterrahmen konstruiert ist, die geeignet sind, im Gebrauch in mindestens zwei Konfigurationen verriegelt zu werden, wobei die Unterrahmen in einer Konfiguration eine Auslegung zum Drillen annehmen und in einer anderen Konfiguration mindestens einer der Unterrahmen nach innen geklappt oder geschwungen ist, um die Gesamtbreite der Maschine zum Transport auf der Straße oder für das Manövrieren auf begrenztem Raum zu verringern.

## Revendications

1. Procédé pour semer des graines (102, 108, 114), comprenant les étapes consistant à :
(a) travailler le sol en tirant des premières dents espacées latéralement (16, 44, 104, 124) à travers le sol, les dents étant ajustées de manière à pénétrer à une profondeur en rapport avec la profondeur à laquelle on veut semer la graine, pour créer une pluralité correspondante de tranchées de faible profondeur de sol travaillé avec des bandes de sol non travaillé entre elles,
(b) à une distance derrière les premières dents (16, 44, 104, 124), introduire la graine immédiatement à l'arrière d'une deuxième dent (14, 42, 120, 126) par le biais d'un moyen de distribution de graines (12, 46, 48, 116) associé à la deuxième dent, la profondeur de pénétration de la deuxième dent étant égale à la profondeur à laquelle on veut semer la graine,
(c) aplanir le sol dans les tranchées avec des moyens de nivellement (22, 128) alignés avec et suivant les deuxièmes dents, **caractérisé en ce que**
(d) chaque deuxième dent est alignée avec l'une des premières dents, de sorte que la graine soit plantée uniquement dans les tranchées formées par les premières dents, de sorte que le sol ne soit travaillé que dans des régions linéaires espacées déterminées par l'espacement latéral des dents, et que les bandes de sol entre elles ne soient pas travaillées.

2. Procédé selon la revendication 1, dans lequel les deuxièmes dents (14, 42, 120, 126) pénètrent substantiellement jusqu'à la même profondeur que les première dents (16, 44, 104, 124).

3. Procédé selon la revendication 2, dans lequel les deuxièmes dents (14, 42, 120, 126) comportent des ailes latérales (100) pour casser et soulever le sol afin de faciliter le dépôt des graines au fond de chaque tranchée.

4. Procédé selon la revendication 1, dans lequel les deuxièmes dents (14, 42, 120, 126) pénètrent jusqu'à une partie de la profondeur des tranchées créées par les premières dents (16, 44, 104, 124).

5. Procédé selon la revendication 4, dans lequel des ailes s'étendant latéralement (100) sur les deuxièmes dents (14, 42, 120, 126) soulèvent et étalent le sol travaillé par les premières dents (16, 44, 104, 124) près du haut de chaque tranchée, et la graine (102, 108, 114) est introduite sous le sol soulevé, de sorte que la graine soit recouverte par le sol à mesure qu'il retombe dans la région supérieure de chaque tranchée.

6. Procédé selon la revendication 1, dans lequel les deuxièmes dents (14, 42, 120, 126) pénètrent à une plus grande profondeur que les premières dents (16, 44, 104, 124).

7. Procédé selon la revendication 6, dans lequel les deuxièmes dents (14, 42, 120, 126) comportent des ailes latérales (100) pour casser et soulever le sol au fond des tranchées formées par les deuxièmes dents afin de faciliter le dépôt des graines (102, 108, 114) au fond de chaque tranchée formée par les deuxièmes dents.

8. Appareil pour cultiver le sol et semer des graines, comprenant :
(a) un cadre, adapté pendant l'utilisation pour être tiré par ou attaché à l'arrière d'un tracteur,
(b) une première rangée de dents (16, 44, 104, 124) portées par le cadre et espacées en travers de la largeur du cadre,
(c) une deuxième rangée de dents (14, 42, 120, 126) également portées par le cadre et espacées à l'arrière de la première rangée dans la direction du mouvement d'avance de l'appareil pendant l'utilisation,
(d) un moyen de trémie (10) contenant la graine (102, 108, 114),
(e) un moyen (12, 46, 48, 116) pour alimenter la graine depuis lui vers l'arrière et jusqu'au côté inférieur de chacune des deuxièmes dents,
(f) un moyen de nivellement du sol (22, 128) porté par le cadre et situé en alignement avec les dents à l'arrière de la deuxième rangée de dents par rapport à ladite direction d'avance du mouvement pendant l'utilisation, de sorte que pendant l'utilisation, à mesure que l'appareil se déplace dans une direction d'avance, le sol qui a été travaillé par les dents est généralement aplani par le passage du moyen de nivellement par-dessus,
**caractérisé en ce que**
(g) les dents de la deuxième rangée sont espacées en travers de la largeur du cadre de sorte que chacune des dents dans la deuxième rangée soit alignée avec l'une des dents dans la première rangée, de sorte que pendant l'utilisation, le sol ne soit travaillé que dans des régions linéaires espacées déterminées par l'espacement latéral des dents, et que les bandes de sol entre elles ne soient pas travaillées.

9. Appareil selon la revendication 8, dans lequel la profondeur de pénétration d'au moins certaines des dents est ajustable par rapport au cadre.

10. Appareil selon la revendication 8 ou 9, dans lequel la hauteur du moyen de nivellement (22, 128) est ajustable, et pendant l'utilisation la hauteur est ajustée pour créer une pression juste suffisante sur le sol de manière à compacter le sol pendant l'utilisation au-dessus et dans la région de la graine, pour créer un bon contact entre le sol et la graine.

11. Appareil selon la revendication 9 ou 10, dans lequel les dents dans la deuxième rangée (14, 42, 120, 126) comportent des ailes latérales (100) qui, pendant l'utilisation, soulèvent le sol travaillé et cassé dans la tranchée créée par les premières dents, à mesure que les deuxièmes dents se déplacent à travers celle-ci, pour permettre à la graine de tomber sous le sol levé, qui, à mesure que les deuxièmes dents continuent d'avancer, retombera de manière à couvrir la graine avant que le sol soit aplani par le moyen de nivellement qui suit.

12. Appareil selon l'une quelconque des revendications 8 à 11, dans lequel une trémie à graine séparée (10) est montée au-dessus de chacune des dents (14, 42, 120, 126) dans la deuxième rangée de dents.

13. Appareil selon l'une quelconque des revendications 8 à 12, dans lequel le cadre est adapté pour être attaché à un attelage à 3 points à l'arrière du tracteur, de sorte que pendant l'utilisation, la hauteur totale du cadre et son angle d'inclinaison par rapport au sol puissent être ajustés.

14. Appareil selon l'une quelconque des revendications 8 à 13, comprenant en outre des roues de chaussée (22, 128) et une barre d'attelage qui s'étend vers l'avant du cadre en vue de permettre l'attachement à un crochet d'attelage sur le tracteur, pour permettre au cadre d'être tiré derrière un tracteur.

15. Appareil selon l'une quelconque des revendications 8 à 14, dans lequel au moins certaines des dents sont ajustables indépendamment pour la profondeur du travail.

16. Appareil selon l'une quelconque des revendications 8 à 15, dans lequel les deuxièmes dents (14, 42, 120, 126) sont des dents à ressort en forme de S et des roues (22, 128) sont prévues, lesquelles, pendant l'utilisation, suivent les dents pour aplatir et compacter le sol, et une roue est prévue pour chaque deuxième dent, et chaque roue est attachée par un bras rigide au centre du ressort en S de sa deuxième dent associée, la partie supérieure du ressort servant pendant l'utilisation à exercer une force descendante sur la roue par le biais du bras et ainsi à travers la roue jusqu'au sol.

17. Appareil selon l'une quelconque des revendications 8 à 16, dans lequel le cadre est construit à partir d'au moins deux sous-cadres qui sont prévus pour être verrouillés pendant l'utilisation dans au moins deux configurations, une dans laquelle les sous-cadres adoptent une configuration pour semer, et une autre dans laquelle au moins l'un des sous-cadres est plié ou rabattu vers l'intérieur pour réduire la largeur globale de la machine en vue du transport sur des routes ou pour manoeuvrer l'appareil dans des espaces restreints.
